Europäisches Patentamt

(19) European Patent Office

Office européen des brevets

(11) Numéro de publication : **0 312 428 B1**

# (12) FASCICULE DE BREVET EUROPEEN

(45) Date de publication du fascicule du brevet :
05.06.91 Bulletin 91/23

(51) Int. Cl.$^5$ : **C10G 11/18, B01J 8/24**

(21) Numéro de dépôt : **88402531.3**

(22) Date de dépôt : **06.10.88**

(54) **Dispositif d'injection d'une charge d'hydrocarbures dans un réacteur de craquage catalytique.**

(30) Priorité : **14.10.87 FR 8714194**

(43) Date de publication de la demande :
**19.04.89 Bulletin 89/16**

(45) Mention de la délivrance du brevet :
**05.06.91 Bulletin 91/23**

(84) Etats contractants désignés :
**AT BE DE ES FR GB GR IT LU NL SE**

(56) Documents cités :
**EP-A- 0 157 691**
**FR-A- 2 102 216**
**US-A- 4 434 049**

(73) Titulaire : **COMPAGNIE DE RAFFINAGE ET DE DISTRIBUTION TOTAL FRANCE**
**84, rue de Villiers**
**F-92300 Levallois Perret (FR)**

(72) Inventeur : **Williatte, Christophe**
**3, Rue Darboy**
**F-75011 Paris (FR)**
Inventeur : **Sigaud, Jean-Bernard**
**18, Boulevard de la République**
**F-92420 Vaucresson (FR)**
Inventeur : **Patureaux, Thierry**
**10, Rue des Frênes Fontaine-la-Mallet**
**F-76290 Montivilliers (FR)**
Inventeur : **Loutaty, Roben**
**29, Rue de Sery**
**F-76600 Le Havre (FR)**

(74) Mandataire : **Jolly, Jean-Pierre et al**
**Cabinet Jolly 54, rue de Clichy**
**F-75009 Paris (FR)**

EP 0 312 428 B1

## Description

La présente invention concerne un dispositif d'injection d'une charge d'hydrocarbures dans un réacteur de craquage catalytique, notamment en lit fluidisé.

Dans les procédés de craquage catalytique en lit fluidisé, appelés dans la technique procédés F.C.C., la charge d'hydrocarbures est injectée dans un réacteur en forme de colonne, dans lequel le catalyseur est maintenu en suspension et se déplace soit suivant un flux essentiellement ascendant (le réacteur est alors dénommé "riser"), soit suivant un flux descendant (le réacteur est alors appelé "dropper").

On se référera ci-après, pour plus de clarté, au cas des réacteurs à flux ascendant, mais la transposition aux réacteurs à flux descendant sera évidente pour l'homme de l'art et les injecteurs de charge qui font l'objet de la présente invention s'appliquent bien entendu aux deux types de réacteurs.

Dans un "riser", le catalyseur régénéré est introduit à la base du réacteur en même temps qu'un gaz porteur, dans un état fluidisé et chaud (entre 650 et 850°C), au-dessous de la zone d'injection de la charge d'hydrocarbures. Celle-ci est introduite dans le réacteur à l'état essentiellement liquide et à une température comprise entre 80 et 300°C.

Entre la zone d'injection de la charge et le sommet du réacteur, le catalyseur cède une partie de son énergie calorifique à la charge, qui est alors vaporisée, et craquée en hydrocarbures légers. Ceci a pour effet d'accroître rapidement le volume des gaz, qui transportent de façon accélérée le catalyseur jusqu'au sommet du réacteur, où il est séparé des hydrocarbures. Le mélange d'hydrocarbures et de grains de catalyseurs atteint à la sortie du riser une température d'équilibre habituellement comprise entre 470 et 530°C.

Pendant ces opérations, une faible partie de la charge (généralement entre 3 et 12% en poids) a formé sur les particules de catalyseur un dépôt solide hydrocarboné ou "coke", qui réduit l'activité catalytique du catalyseur et limite la conversion de la charge en produits valorisables. Il est donc nécessaire de régénérer le catalyseur par combustion de ce dépôt de coke, avant de le réintroduire dans le réacteur pour un nouveau cycle de craquage.

Le dépôt de coke sur le catalyseur est généralement d'autant plus important que la charge injectée est plus lourde et, par conséquent, plus difficilement vaporisable. Les fractions non vaporisées forment alors sur le catalyseur une pellicule composée principalement de coke et d'hydrocarbures lourds.

Afin de limiter ce phénomène, il importe donc d'éviter que des fractions liquides de la charge d'hydrocarbures entrent en contact avec le catalyseur avant d'être vaporisées, puis craquées, et il est donc nécessaire de réduire la durée de vaporisation de la charge.

Par ailleurs l'intérêt d'injecter dans le réacteur la charge à traiter à grande vitesse et sous forme de très fines gouttelettes, est bien connu dans la technique (voir brevets US 2 891 000 et 2 994 659).

On a proposé d'utiliser dans ce but des injecteurs de charge comprenant un venturi (voir brevets FR 2 102 216, US 3 240 253 et US 4 523 987 ; voir également EP-A-157 691), mais cette technique pose de nombreux problèmes au niveau de l'injection dans des réacteurs en lit fluidisé. En effet, les vitesses au niveau du col du venturi entraînent le décollement des veines de fluides des parois de l'injecteur, la formation de courants de recirculation et une pénétration dans l'injecteur de particules de catalyseur, avec pour conséquence une érosion marquée du dispositif d'injection et une détérioration rapide des performances.

On a aussi proposé des dispositifs d'injection à impaction (voir brevet US 4 434 049), qui utilisent des moyens mécaniques pour atomiser la charge, mais la qualité de la pulvérisation de la charge, à énergie égale, est beaucoup moins bonne.

La présente invention vise à remédier à ces inconvénients en proposant un dispositif d'injection d'une charge d'hydrocarbures dans un réacteur de craquage catalytique quine provoque qu'une faible chute de la pression d'injection, qui atomise la charge en très fines gouttelettes et l'injecte à grande vitesse dans le réacteur sans risques d'érosionde l'injecteur, ni d'attrition du catalyseur en aval de l'injecteur.

A cet effet, l'invention a pour objet un dispositif d'injection d'une charge d'hydrocarbures dans un réacteur de craquage catalytique, comprenant, d'amont en aval dans le sens de déplacement de la charge d'hydrocarbures, un système d'admission et de mélange de la charge liquide d'hydrocarbures et de vapeur d'eau, un venturi dont le convergent est raccordé audit système d'admission et de mélange, et un capot de protection solidaire du divergent de ce venturi et présentant un orifice d'injection de la charge dans le réacteur, ledit venturi ayant des dimensions telles que la vitesse du mélange de la charge liquide et de la vapeur d'eau y atteigne des conditions soniques au niveau du col, ce dispositif étant caractérisé en ce que le col rectiligne, situé entre le divergent et le convergent, est relié à ceux-ci d'une manière continue par un profil curviligne, sans former d'angle supérieur respectivement à environ 5° et environ 15° avec l'axe du venturi, et en ce que la surface de l'orifice d'injection du capot de protection est comprise entre 1,5 et 10 et, de préférence, entre 2 et 5 fois celle du col du venturi.

Comme on le verra ci-après, cette combinaison de caractéristiques a pour effet d'atomiser la charge en gouttelettes de très petit diamètre, pouvant être de l'ordre de 30 micromètres en moyenne, et de permettre l'injection dans le réacteur à des vitesses très élevées, pouvant atteindre 150 m/s, sans risquer, pour autant, d'introduction notable de grains de catalyseurs par retour dans le venturi, ce qui se traduirait par une érosion élevée et une durée de vie limitée de celui-ci.

En particulier, la présence d'un capot de protection à l'extrémité du divergent, avec un orifice d'injection réduit, permet de limiter les risques de pénétration des grains de catalyseur dans le dispositif d'injection. Par ailleurs, le profil curviligne du venturi et la limitation des angles du divergent et du convergent aux valeurs indiquées évitent aux veines de fluide de se décoller. Si des grains de catalyseur pénètrent dans le dispositif, ils ne sont donc pas entraînés par des courants de recirculation, mais sont au contraire immédiatement renvoyés avec la charge dans le réacteur.

Le dispositif d'injection conforme à l'invention se distingue donc par les avantages suivants des dispositifs connus :

– une longévité accrue, du fait d'une usure moindre due aux grains de catalyseur ;

– une meilleure efficacité, puisque les gouttelettes de la charge ont un diamètre compris entre environ 10 et environ 50 μm et sont injectées à des vitesses comprises entre environ 60 m/s et 150 m/s ;

– une perte de charge relativement faible au niveau de l'injecteur ;

– des risques de bouchage négligeables, en raison des conditions soniques conduisant à une vitesse élevée au niveau du col du venturi ;

– une vaporisation quasi-instantanée de la charge dans le réacteur, avec pour conséquences un meilleur rendement du craquage et une diminution des dépôts de coke sur les particules de catalyseur.

La charge pourra être introduite sous la forme d'un jet dans le réacteur, en général dans la direction de déplacement du catalyseur, en formant un angle de 20 à 40° avec cette direction.

Le mélange du catalyseur en lit fluidisé et de la charge injectée se fera d'autant plus facilement et intimement que la vitesse d'injection de la charge sera plus élevée. Avec le dispositif d'injection conforme à l'invention, cette vitesse d'injection sera très supérieure à celle des procédés usuels de craquage catalytique en lit fluidisé. Du fait du faible diamètre des gouttelettes d'hydrocarbures, les transferts thermiques et la vaporisation seront quasi-instantanés. En outre, il est ainsi possible de mieux maîtriser la durée de contact entre le catalyseur et les hydrocarbures vaporisés, ce qui est important, lorsque l'on souhaite limiter cette durée à quelques secondes, voire à quelques fractions de seconde.

L'injection de la charge dans le réacteur s'effectuera de préférence à l'aide de plusieurs injecteurs disposés à un même niveau et répartis régulièrement à la périphérie du réacteur. On pourra utiliser, par exemple, de 2 à 12 injecteurs de charge, suivant les caractéristiques du réacteur du craquage en lit fluidisé.

La forme de l'orifice du capot de protection du dispositif sera déterminée par les conditions géométriques du réacteur, par le nombre d'injecteurs, leur disposition, etc. Cet orifice pourra être, suivant les cas, circulaire, ovale, ou en forme de fente. Ce capot de protection pourra, avantageusement, avoir la forme d'une calotte sphérique et l'orifice pourra, de façon connue en soi, être muni de lèvres destinées à façonner la forme du jet de charge à craquer pulvérisée dans le réacteur. Cet orifice pourra même, à l'occasion, être constitué de un ou de plusieurs tubes dont la section totale sera donc nécessairement comprise entre 1,5 et 10 fois celle du col du venturi. Selon l'une des formes préférées, mais nullement limitative, de l'invention, l'orifice de sortie des gouttelettes pourra se présenter sous la forme d'une simple fente disposée dans un plan de symétrie de cette calotte et l'injection dans le réacteur pourra alors prendre la forme d'un jet plat triangulaire qui contribuera à la mise en contact rapide et uniforme de la charge à craquer et du catalyseur. L'angle d'ouverture de ce jet pourra avantageusement être compris entre 60 et 90°C.

Ainsi qu'il a été indiqué ci-dessus, le dispositif d'injection selon l'invention comprendra un système d'admission et de mélange de la charge d'hydrocarbures et de gaz d'atomisation, qui pourra avantageusement être de la vapeur d'eau ou toute autre phase gazeuse acceptable. Ce système comprendra, par exemple, deux tubes concentriques, le tube central pouvant amener la vapeur d'eau et l'espace annulaire périphérique pouvant servir de passage à la charge ou l'inverse suivant les cas, le tube externe étant raccordé au venturi, tandis que le tube central peut déboucher en amont ou au niveau du convergent du venturi.

Afin d'éviter tout décollement des parois du mélange de la charge et de la vapeur d'eau et d'éliminer ainsi toute pénétration nuisible du catalyseur dans l'injecteur de charge, le venturi ne présentera aucune arête vive et le convergent et le divergent de celui-ci se raccorderont au col avec des profils curvilignes continus ayant un rayon de courbure de 2 à 3 mètres. Le divergent fera globalement avec l'axe un angle d'environ 3 degrés et le convergent un angle d'environ 12 degrés.

Le col rectiligne du venturi aura un diamètre tel, compte tenu des conditions d'alimentation en vapeur surchauffée et en charge hydrocarbonée (débit et pression) que l'injecteur fonctionne en régime critique, c'est-à-dire que le débit massique global ne dépend plus de la différence de pression entre l'amont et l'aval de venturi, mais uniquement de la pression amont. On obtient ainsi une atomisation de la charge liquide en très fines gouttelettes, dont le diamètre peut être aussi faible que 30 μm, contre 500 μm avec le système traditionnel. Toutes conditions égales par ailleurs, l'expérience montre que les gouttelettes de très faible diamètre peuvent se vaporiser dans le réacteur en moins de 3 millisecondes environ, alors que, dans des conditions identiques, environ 230 millisecondes sont nécessaires pour les gouttelettes de 500 micromètres des injecteurs usuels. La zone de transfert de masse et de chaleur est alors réduite de 150 à 3 centimètres et il est clair que l'on réduit d'autant le risque que des fractions liquides se déposent sur le catalyseur, avant leur vaporisation ou leur craquage.

L'expérience montre également que le diamètre des gouttelettes obtenues à la sortie du venturi varie en sens inverse du rapport entre le débit massique de vapeur et la section de passage $S_c$ la plus faible (col) du venturi.

Les débits de charge liquide et de gaz d'atomisation étant fixés, le diamètre du col sera calculé par la relation existant entre la pression amont et les flux massiques du liquide et du gaz au col.

Le débit nominal de la charge est normalement fixé par des impératifs extérieurs (caractéristiques du procédé, capacité des autres équipements de l'unité, etc.) et le débit de la vapeur d'atomisation dépend donc de celui de la charge.

Le diamètre de l'extrémité aval du divergent du venturi sera déterminé de façon telle que la vitesse du mélange vapeur + hydrocarbures soit comprise entre 30 et 150 m/s et, de préférence, entre 30 et 120 m/s, de manière à éviter une attrition du catalyseur en suspension par le jet sortant du capot, d'autant que celui-ci réaccélère le mélange à sa sortie du divergent.

La longueur du col du venturi sera généralement comprise entre 1 et 10 fois son diamètre.

D'autres caractéristiques dimensionnelles du venturi, du système d'alimentation et de mélange et du capot apparaîtront dans la description détaillée qui sera donnée ci-après d'un injecteur conforme à l'invention.

Cet injecteur peut équiper aussi bien un nouveau réacteur de craquage catalytique en lit fluidisé qu'une ancienne unité rénovée. Sur ces unités rénovées, les pressions disponibles pour la charge et pour la vapeur sont plus faibles que dans les nouvelles unités, mais des performances très satisfaisantes (diamètre de gouttes inférieur à 120 micromètres) peuvent encore être obtenues.

L'injecteur conforme à l'invention est fixé de façon usuelle à la paroi du réacteur par l'intermédiaire d'un manchon, avec interposition d'un isolant thermique.

Les dessins annexés illustrent une forme de réalisation d'un tel injecteur. Ils ne sont pas limitatifs.

Sur ces dessins :

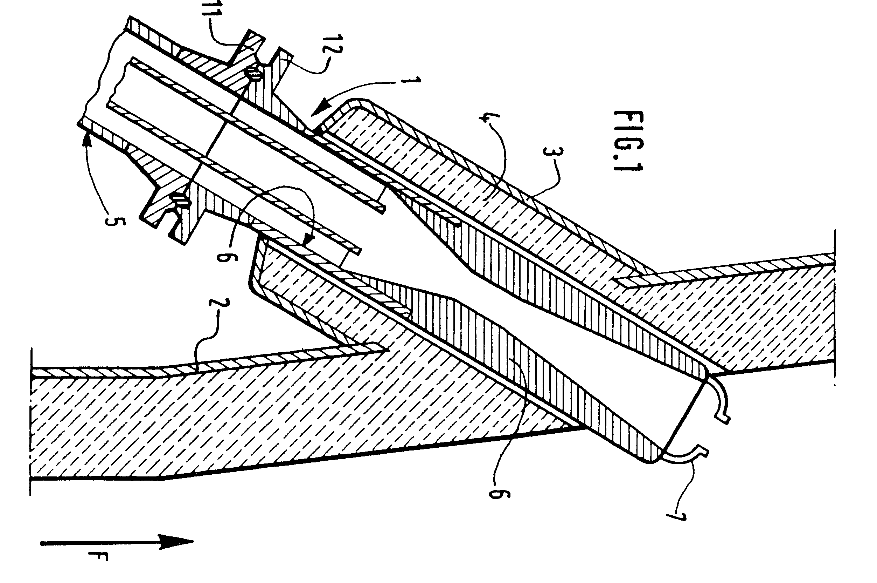

Le figure 1 est une coupe schématique illustrant le montage de l'injecteur conforme à l'invention sur la paroi du réacteur ;

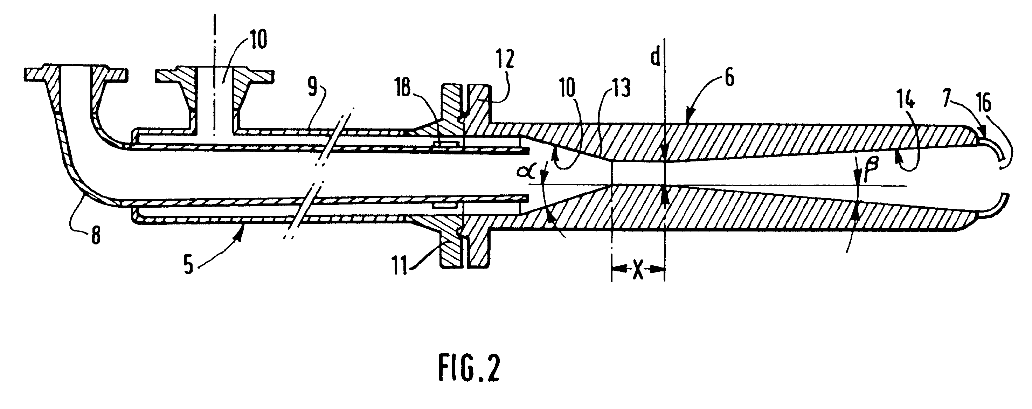

La figure 2 est une vue en coupe de l'injecteur et de son système d'alimentation et de mélange.

L'injecteur de charge représenté sur la figure 1, désigné par la référence générale 1, traverse la paroi 2 du réacteur et est fixé sur celle-ci à l'aide d'un manchon 3, avec un isolant thermique 4.

L'injecteur 1 comprend essentiellement trois parties, à savoir :

– un système d'alimentation et de mélange 5 ;
– un venturi 6 ou tout autre ensemble convergent-col-divergent ;
– un capot 7.

Le système d'alimentation et de mélange 5, illustré sur la figure 2, comprend deux tubes concentriques, un tube central 8, servant à l'acheminement de la charge liquide d'hydrocarbures à traiter, et un second tube externe 9, alimenté latéralement en 10 en vapeur d'eau surchauffée, qui circule entre les tubes 8 et 9.

Ce système de mélange a un double but :

– assurer un mélange de la charge et de la vapeur, qui minimise les tourbillons et les pertes de charge ;
– effectuer ce mélange au plus près du convergent 10 du venturi 6 raccordé à ce système, afin d'éviter d'éventuels problèmes de condensation de la vapeur au contact de la charge plus froide.

Le tube 8 d'introduction de la charge pénètre dans le venturi 6 et débouche immédiatement en amont du convergent 10.

Le tube 9 et le venturi 6 sont assemblés par des brides, respectivement 11 et 12. Des ailettes 18 assurent le centrage du tube 8 au niveau de la bride 11.

Pour le dimensionnement des tubes 8 et 9, il faut tenir compte de la vitesse de la charge d'hydrocarbures, généralement comprise entre 1 et 10 m/s, et de celle de la vapeur, comprise entre 10 et 80 m/s.

Le venturi 6, comprenant le convergent 10, un col rectiligne 13 et un divergent 14, constitue une partie important de l'injecteur conforme à l'invention. Il a pour but, en effet, d'accélérer la charge liquide mélangée à la vapeur d'eau surchauffée jusqu'à une vitesse pseudo-critique au niveau du col 13, pour provoquer sa fragmentation de très fines gouttelettes d'un diamètre inférieur à environ 120 micromètres et d'un diamètre moyen compris entre 30 et 50 micromètres. Par ailleurs, il doit permettre au mélange formé de ces gouttelettes et de la vapeur d'eau d'avoir une vitesse comprise entre 30 et 150 m/s à la sortie du divergent 14.

De préférence, la longueur $x$ du col rectiligne sera égale sensiblement à cinq fois le diamètre $d$ de ce col.

Le convergent 10 et le divergent 14 se raccorderont au col 13 de manière continue par un profil curviligne continu, de 2 à 3 mètres de rayon, sans discontinuités susceptibles de provoquer un décollement de la veine fluide des parois internes du venturi, ce qui aurait pour effet de provoquer des tourbillons favorisant l'entrée des particules du catalyseur, avec pour conséquence une érosion des parois du divergent 14.

L'angle α du convergent 10 sera globalement de l'ordre de 10 à 15°, et l'angle β du divergent 14 sera globalement de l'ordre de 2 à 5°.

A l'extrémité du divergent est fixé un capot hémisphérique 7, présentant ici, dans un plan diamétral, une fente 16 destinée à injecter dans le réacteur la charge de gouttelettes d'hydrocarbures sous la forme soit d'un cône, soit d'un pinceau sensiblement plat. L'angle du jet issu de l'injecteur dépendra naturellement, de façon connue en soi, de la géométrie de la fente et de la zone d'injection, ainsi que, des conditions opératoires du réacteur et du nombre d'injecteurs utilisés.

La vitesse de sortie du capot des gouttelettes d'hydrocarbures sera de préférence comprise entre 30 et 120 m/s et ces gouttelettes seront de préférence injectées dans le réacteur de façon à couvrir aussi uniformément que possible la section transversale de celui-ci. On utilisera généralement et de façon connue en soi de 2 à 12 injecteurs disposés à un même niveau et dirigés dans le sens de déplacement du lit de catalyseur (flèche F de la figure 1), en faisant un angle d'environ 20 à 90° avec l'axe du réacteur.

La vitesse d'injection élevée de la charge et la très petite taille des gouttelettes d'hydrocarbures facilitent la vaporisation complète de celles-ci en quelques millisecondes.

## Revendications

1. Dispositif d'injection d'une charge d'hydrocarbures dans un réacteur de craquage catalytique comprenant, d'amont en aval dans le sens de déplacement de la charge, un système (5) d'admission et de mélange de la charge liquide d'hydrocarbures et de vapeur d'eau, un venturi (6) dont le convergent (10) est raccordé audit système (5) d'admission et de mélange, et un capot de protection (7) solidaire du divergent (14) de ce venturi et présentant un orifice d'injection (16) de la charge dans le réacteur, ledit venturi (6) ayant des dimensions telles que la vitesse du mélange de la charge liquide et de la vapeur d'eau y atteigne des conditions soniques au niveau du col (13), ce dispositif étant caractérisé en ce que le col rectiligne situé entre le divergent et le convergent (10) est relié à ceux-ci d'une manière continue par un profil curviligne sans former d'angle supérieur respectivement à environ 5° et environ 15° avec l'axe du venturi. La surface de l'orifice d'injection (16) du capot de protection (7) est comprise entre 1,5 et 10 et, de préférence, entre 2 et 5 fois celle du col du venturi.

2. Dispositif selon la revendication 1, caractérisé en ce que ledit système d'admission et de mélange comprend deux tubes concentriques, l'un pouvant être raccordé à l'alimentation en hydrocarbures et l'autre pouvant être raccordé à l'alimentation en vapeur d'eau.

3. Dispositif selon la revendication 2, caractérisé en ce que ledit tube interne (8) débouche en amont du convergent (10) dudit venturi (6).

4. Dispositif selon l'une des revendications 1 à 3, caractérisé en ce que ledit venturi (5) ne présente, en coupe axiale, aucune arête vive, les parties de raccordement du convergent (10), du col (13) et du divergent (14) ayant un rayon de courbure de 2 à 3 mètres, en ce que le convergent (10) dudit venturi fait avec l'axe de celui-ci un angle (α) compris entre environ 10 et 15°, et en ce que le divergent (14) dudit venturi fait avec l'axe de celui-ci un angle (β) compris entre environ 2 et 5°.

5. Dispositif selon l'une des revendications 1 à 4, caractérisé en ce que la longueur du col (13) dudit venturi, est égale à environ 1 à 10 fois son diamètre.

6. Dispositif selon l'une des revendications 1 à 5, caractérisé en ce que ledit capot (7) a la forme d'une calotte sphérique et en ce que l'orifice d'injection (16) dudit capot a la forme d'une fente disposée suivant un plan diamétral dudit capot.

7. Dispositif selon la revendication 6, caractérisé en ce que ladite fente occupe un secteur circulaire dudit capot compris entre 60 et 90°.

8. Dispositif selon l'une des revendications 1 à 7, caractérisé en ce que l'axe de l'injecteur fait un angle de 20 à 90° par rapport à celui du réacteur.

## Claims

1. Apparatus for injecting a hydrocarbon feed into a catalytic cracking reactor comprising, downstream in the direction of displacement of the feed, a system (5) for admission and mixing of the liquid hydrocarbon feed and steam, a venturi tube (6) the convergent (10) of which is connected to the said admission and mixing system (5), and a protection cap (7) integral with the divergent (14) of this venturi tube and possessing an opening (16) for injection of the feed into the reactor, the said venturi tube (6) having dimensions such that the rate of mixture of the liquid feed and the steam attains sonic conditions there at the level of the neck (13), this apparatus being characterised in that the rectilinear neck situated between the divergent and convergent (10) is connected continuously to them by a curved profile without forming an angle of respectively more than about 5° and about 15° with the axis of the venturi tube. The surface area of the injection opening (16) in the protection cap (7) is between 1.5 and 10 times, preferably between 2 and 5 times, that of the neck of the venturi tube.

2. Apparatus according to claim 1, characterised in that the said admission and mixing system comprises two concentric tubes, the one being able to be connected to the hydrocarbon supply and the other being able to be connected to the steam supply.

3. Apparatus according to claim 2, characterised in that the said internal tube (8) issues upstream of the convergent (10) of the said venturi tube (6).

4. Apparatus according to any one of claims 1 to 3, characterised in that the said venturi tube (5) does not possess, in axial section, any sharp edges, the parts connecting the convergent (10), the neck (13) and the divergent (14) having a radius of curvature of 2 to 3 metres, in that the convergent (10) of the said venturi tube forms with the axis of the latter an angle ($\alpha$) of between about 10 and 15°, and in that the divergent (14) of the said venturi tube forms with the axis of the latter an angle ($\beta$) of between about 2 and 5°.

5. Apparatus according to any one of claims 1 to 4, characterised in that the length of the neck (13) of the said venturi tube is equal to about 1 to 10 times its diameter.

6. Apparatus according to any one of claims 1 to 5, characterised in that the said cap (7) has the shape of a spherical dome and in that the injection opening (16) in the said cap has the shape of a slot disposed along a diametral plane of the said cap.

7. Apparatus according to claim 6, characterised in that the said slot occupies a sector of a circle of the said cap lying between 60 and 90°.

8. Apparatus according to any one of claims 1 to 7, characterised in that the axis of the injector forms an angle of 20 to 90° with respect to that of the reactor.

## Ansprüche

1. Vorrichtung zum Einspritzen von Kohlenwasserstoff-Einsätzen in einen katalytischen Krockreaktor, welche stromabwärts im Sinne der Bewegung des Einsatzes ein System (5) zum Zuführen und Mischen des Einsatzes flüssiger Kohlenwasserstoffe mit Wasserdampf, ein Venturirohr (6), dessen konvergierender Abschnitt (10) mit dem Zuführ- und Mischsystem verbunden ist, und eine mit dem divergierenden Abschnitt (14) des Venturirohres verbundene Schutzkappe (7) umfaßt, welche eine Einspritzöffnung (16) für den Einsatz in den Reaktor aufweist, wobei das Venturirohr derartige Abmessungen aufweist, daß die Geschwindigkeit des Gemisches aus flüssigem Einsatz und Wasserdampf darin Schallbedingungen auf Höhe der Drosselstelle (13) erlangt, dadurch gekennzeichnet, daß die zwischen dem konvergierenden (10) und dem divergierenden Abschnitt liegende geradlinige Drosselstelle mit diesen kontinuierlich über ein bogenförmiges Profil verbunden ist, ohne einen größeren Winkel als ungefähr 5° und ungefähr 15° mit der Achse des Venturirohres zu bilden. Die Fläche der Einspritzöffnung (16) der Schutzkappe (7) liegt zwischen dem 1,5- und 10-fachen, und vorzugsweise zwischen dem 2- und 5-fachen, der Fläche der Venturi-Drosselstelle.

2. Vorrichtung nach Anspruch 1, dadurch gekennzeichnet, daß das System zum Zuführen und Mischen zwei konzentrische Rohre umfaßt, wobei eines mit der Speisung der Kohlenwasserstoffe und das andere mit der Speisung für Wasserdampf verbunden sein kann.

3. Vorrichtung nach Anspruch 2, dadurch gekennzeichnet, daß das innere Rohr (8) vor dem konvergierenden Abschnitt (10) des Venturirohres (6) mündet.

4. Vorrichtung nach einem der Ansprüche 1 bis 3, dadurch gekennzeichnet, daß das Venturirohr (5) in axialem Schnitt keine spitze kante aufweist, wobei die Anschlußbereiche des konvergierenden Abschnittes (10) der Drosselstelle (13) und des divergierenden Abschnittes (14) einen krümmungsradius von 2 bis 3 m aufweisen daß der konvergierende Abschnitt (10) des Venturirohres mit der Achse desselben einen Winkel ($\alpha$) zwischen ungefähr 10 und 15° einschließt und daß der divergierende Abschnitt (14) des Venturirohres mit der Achse desselben einen Winkel ($\beta$) zwischen ungefähr 2 und 5° einschließt.

5. Vorrichtung nach einem der Ansprüche 1 bis 4, dadurch gekennzeichnet, daß die Länge der Drosselstelle (13) des Venturirohres gleich dem ungefähr 1- bis 10-fachen ihres Durchmessers ist.

6. Vorrichtung nach einem der Ansprüche 1 bis 5, dadurch gekennzeichnet, daß dir Kappe (7) die Form einer Kugelkalotte aufweist und daß die Einspritzöffnung (16) der Kappe die Form eines Schlitzes aufweist, welcher längs eine Diametralebene der Kappe verläuft.

7. Vorrichtung nach Anspruch 6, dadurch gekennzeichnet, daß der Schlitz eine zwischen 60 und 90° liegenden Kreissektor der Kappe einnimmt.

8. Vorrichtung nach einem der Ansprüche 1 bis 7, dadurch gekennzeichnet, daß die Achse des Injektors eine Winkel von 20 bis 90° mit des Achse des Reaktors einschließt.

FIG.1

FIG.2

EP 0 312 428 B1